(19) Europäisches Patentamt
European Patent Office
Office européen des brevets

(11) EP 4 586 462 A1

(12) EUROPEAN PATENT APPLICATION

(43) Date of publication:
16.07.2025 Bulletin 2025/29

(21) Application number: 24151335.7

(22) Date of filing: 11.01.2024

(51) International Patent Classification (IPC):
H02J 50/20 (2016.01)        H02J 50/27 (2016.01)

(52) Cooperative Patent Classification (CPC):
H02J 50/20; H02J 50/27

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Suen, Yan Kit
Hong Kong (HK)

(72) Inventor: Suen, Yan Kit
Hong Kong (HK)

(74) Representative: Klunker IP
Patentanwälte PartG mbB
Destouchesstraße 68
80796 München (DE)

(54) WIRELESS CHARGING METHOD AND EQUIPMENT, AND STORAGE MEDIA

(57) Provided are a wireless charging method and equipment, and a storage medium. The method comprises: acquiring a WiFi signal; acquiring an extremely narrow millimeter wave; converting, by one or more spin torque oscillator STOs, the WiFi signal into a microwave signal; converting, by a rectifying device, the microwave signal and the extremely narrow millimeter wave into a DC output signal; and wirelessly charging, by the charging module, an electronic equipment with electromagnetic wave using the DC output signal. Thereby, electric power is provided for smart phones, tablet computers, laptop computers, wearable devices, logistics industry, smart homes and even IOT systems, and convenient wireless charging solutions are provided for scenarios such as homes, offices, or public places.

FIG. 1

EP 4 586 462 A1

**Description**

TECHNICAL FIELD

The present disclosure relates to the technical field of wireless charging, in particular to a wireless charging method and equipment, and storage medium.

DESCRIPTION OF THE PRIOR ART

At present, wireless charging has become a common technology, which provides a convenient way to power our devices. Currently, traditional power source is used in most wireless charging technologies to charge equipment that are compatible with a receiving coil by embedding a coil in a charging board or charging pad.

SUMMARY OF THE INVENTION

The embodiments of the present application provide a wireless charging method and equipment, and a storage medium, and solutions that can utilize a WiFi signal and an extremely narrow millimeter wave for charging.

The first aspect of the embodiments of the present application provides a wireless charging method, which comprises:

acquiring a WiFi signal;
acquiring an extremely narrow millimeter wave;
converting, by one or more spin torque oscillators STOs, the WiFi signal into a microwave signal;
converting, by a rectifying device, the microwave signal and the extremely narrow millimeter wave into a DC output signal; and
wirelessly charging, by the charging module, an electronic equipment with electromagnetic wave using the DC output signal.

A second aspect of the embodiments of the present application provide an electronic equipment, which comprises:

a WiFi signal device for acquiring a WiFi signal;
one or more spin torque oscillator STOs for converting the WiFi signal into a microwave signal;
an extremely narrow millimeter wave device for acquiring an extremely narrow millimeter wave;
a rectifying device for converting the WiFi signal into a DC output signal; and
a charging module for wirelessly charging an electronic equipment with electromagnetic wave using the DC output signal and the extremely narrow millimeter wave.

According to a third aspect, the embodiments of the present application provide a computer-readable storage medium, wherein the computer-readable storage medium is used for storing computer programs, wherein the computer programs cause the computer to execute instructions for some or all of the steps described in the first aspect of the embodiments of the present application.

According to a fourth aspect, the embodiments of the present application provide a computer program product, wherein the computer program product comprises a non-instantaneous computer-readable storage medium in which the computer programs is stored, and the computer programs can be executed to enable the computer to perform some or all of the steps described in the first aspect of the embodiments of the present application. The computer program product can be a software installation package.

Through the implementation of the embodiments of the present application, the following beneficial effects can be obtained:

It can be seen that the wireless charging method and equipment and a storage medium are described in the embodiments of the present application, in which the method comprises: acquiring a WiFi signal; acquiring an extremely narrow millimeter wave; converting, by one or more spin torque oscillator STOs, the WiFi signal into a microwave signal; converting, by a rectifying device, the microwave signal and the extremely narrow millimeter wave into a DC output signal; and wirelessly charging, by the charging module, an electronic equipment with electromagnetic wave using the DC output signal. Thereby, wireless charging via WiFi signal and extremely narrow millimeter wave is realized, and electric power is provided for smart phones, tablet computers, wearable devices, logistics industry, smart homes and even Internet of Things IOT systems, and convenient wireless charging solutions are provided for scenarios such as homes, offices, or public places.

BRIEF DESCRIPTION OF DRAWINGS

In order to illustrate more clearly the technical solutions in the embodiments of the present application, the drawings that need to be used in the description of the embodiments will be briefly introduced below. It is obvious that the drawings described below are some embodiments of the present application, and for those skilled in the art, other drawings can be obtained according to these drawings without creative labor.

FIG. 1 is a structure diagram of a wireless charging equipment provided by the embodiments of the present disclosure;
FIG. 2 is a structure diagram of a rectifying device provided by the embodiments of the present disclosure;
FIG. 3 is a structure diagram of a phased array antenna board provided by the embodiments of the present disclosure;
FIG. 4 is a flow chart of a first wireless charging equipment provided by the embodiments of the present disclosure;
FIG. 5 is a diagram of demonstration of STO producing high-frequency oscillations provided by the embodiments of the present disclosure;
FIG. 6 is a flow chart of a second wireless charging equipment provided by the embodiments of the present disclosure;
FIG. 7 is a structure diagram of another wireless charging equipment provided by the embodiments of the present disclosure;
FIG. 8 is a diagram of demonstration of an antenna board provided by the embodiments of the present disclosure.

DESCRIPTION OF EMBODIMENTS

In the following, the technical solutions in the embodiments of the present application will be clearly and completely described in conjunction with the accompanying drawings in embodiments of the present application. The described embodiments are only a part of the embodiments of the present application, not all embodiments. Based on the embodiments in the present application, all other embodiments obtained by those of ordinary skill in the art without making creative labor, fall within the scope of the protection of the present application.

The terms "first", "second", "third" and "fourth", etc., in the description, claims and drawings of the present application, are used to distinguish different objects, and are not used to describe a particular order. In addition, the terms "comprise", "have" and any variants of them, are intended to cover non-exclusive inclusions. For example, a process, method, system, product, or equipment that contains a series of steps or units is not limited to the listed steps or elements, but may optionally include steps or units that are not listed, or may optionally include other steps or units that are inherent to those processes, methods, products, or equipment.

A reference to "embodiment" herein means that particular features, structures or characteristics described in conjunction with an embodiment may be included in at least one embodiment of the present application. The phrase appearing in various places in this description does not necessarily refer to the same embodiment, nor is it an independent or alternative embodiment that is mutually exclusive with other embodiments. It is understood explicitly and implicitly by those skilled in the art that an embodiment described herein may be combined with other embodiments.

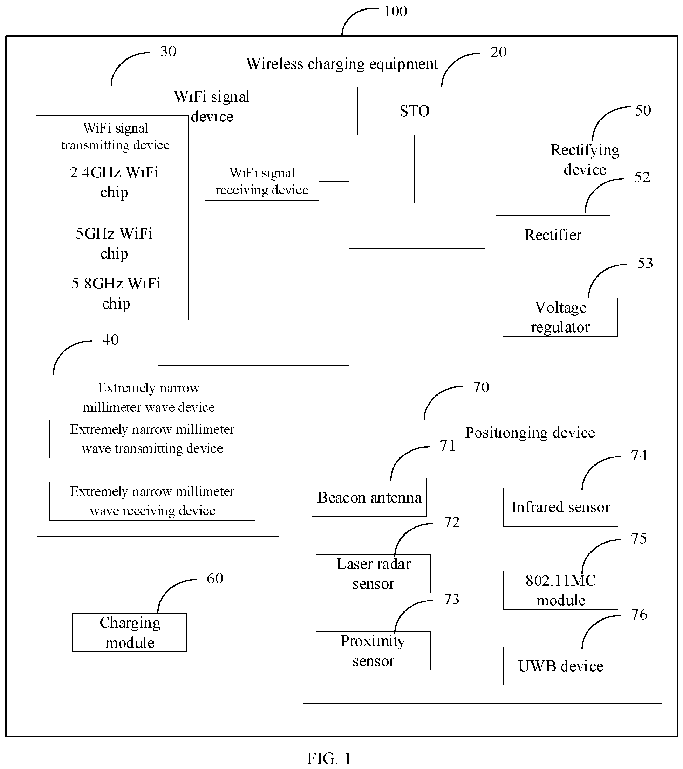

As shown in FIG. 1, which is a system diagram of a wireless charging equipment provided in embodiments of the present invention. The wireless charging equipment 100 comprises an STO 20, a WiFi signal device 30, an extremely narrow millimeter wave device 40, a rectifying device 50 and a charging module 60.

Wherein the WiFi signal device 30 is used for acquiring a WiFi signal;

the spin torque oscillator STO 20 is used for converting the WiFi signal into a microwave signal;
the extremely narrow millimeter wave device 40 is used for acquiring an extremely narrow millimeter wave;
the rectifying device is used for converting the microwave signal and the extremely narrow millimeter wave into a DC output signal; and
the charging module 60 is used for wirelessly charging an electronic equipment with electromagnetic wave using the DC output signal.

Wherein, the WiFi signal device 30 can comprise a WiFi signal transmitting device and a WiFi signal receiving device. The extremely narrow millimeter wave device 40 may comprise an extremely narrow millimeter wave transmitting device and an extremely narrow millimeter wave receiving device. The WiFi signal transmitting device is used for transmitting WiFi signal, and the extremely narrow millimeter wave transmitting device is used for transmitting extremely narrow millimeter wave. The WiFi signal receiving device can receive not only the WiFi signal transmitted by the WiFi signal transmitting device but also the WiFi signal transmitted by other equipment in the environment. For example, in public places such as large shopping malls or squares, there will be many WiFi signals available for public use, and these WiFi signals can be used to charge electronic equipment. The WiFi signal receiving device of the wireless charging equipment can receive the WiFi signal transmitted by a routing equipment.

In a specific embodiment, the WiFi signal transmitting device may include at least one of the following WiFi chips:

2.4GHz WiFi chip, 5GHzWiFi chip, 5.8GHz (or 6GHz) WiFi chip. These WiFi chips are used for transmitting WiFi signals of different frequencies. The WiFi signal transmitting device may also include a plurality of power amplifier chips, which are used for connecting with WiFi chips to amplify the WiFi signals to be transmitted.

The WiFi signal device 30 can also generate and transmit a WiFi signal inside the wireless charging equipment, and receive the WiFi signal internally by the PCB circuit board to provide the WiFi signal to the rectifying device.

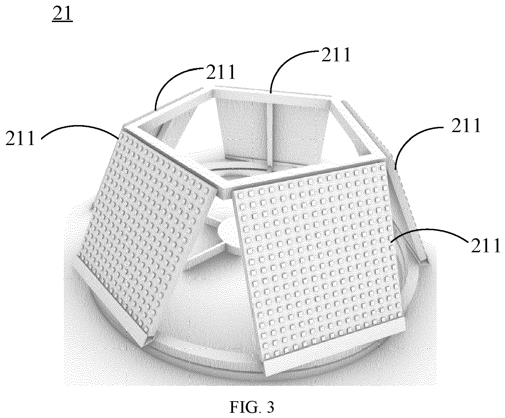

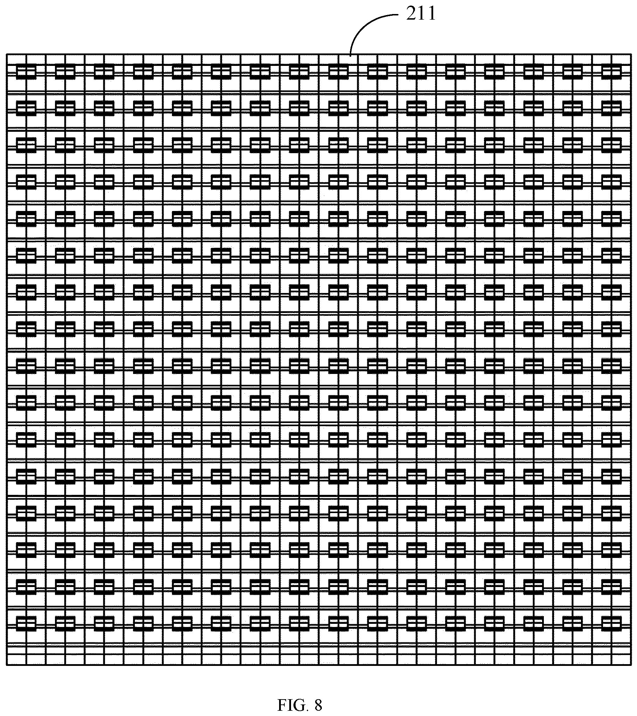

The extremely narrow millimeter-wave transmitting device comprises a phased array antenna board 21. The phased array antenna board comprises a plurality of antenna boards which each comprises a plurality of millimeter-wave transmitting chips. The plurality of antenna boards are arranged at different angles. For example, 5 antenna boards can be combined together, each of which comprises 256 millimeter-wave transmitting chips, hence the phased array antenna board may include 1280 millimeter-wave transmitting chips. By arranging the plurality of antenna boards at different angles, the transmitting range of millimeter-wave can be increased. For another example, as shown in FIG. 3 and FIG. 8, the phased array antenna board may include 5 antenna boards 211, each of which may include 1280 millimeter-wave transmitting chips, and 5 antenna boards are arranged at 5 different angles, therefore a total of 6400 millimeter wave transmitting chips transmit extremely narrow millimeter waves, which have a band range of 60-80GHz for example.

The extremely narrow millimeter wave transmitting device can be arranged on a rotating base, which can automatically rotate 360 degrees to adjust the transmission angle of the extremely narrow millimeter wave transmitting device 20. For example, the rotating base may be a roller rotating base, so that the extremely narrow millimeter wave transmitting device can be concentrated to transmit the extremely narrow millimeter wave in a larger range. The extremely narrow millimeter wave receiving can be an electromagnetic wave sensor.

The extremely narrow millimeter wave device 40 can also generate and transmit an extremely narrow millimeter wave inside the wireless charging equipment, and receive the extremely narrow millimeter wave by the PCB circuit board to provide extremely narrow millimeter wave for wireless charging.

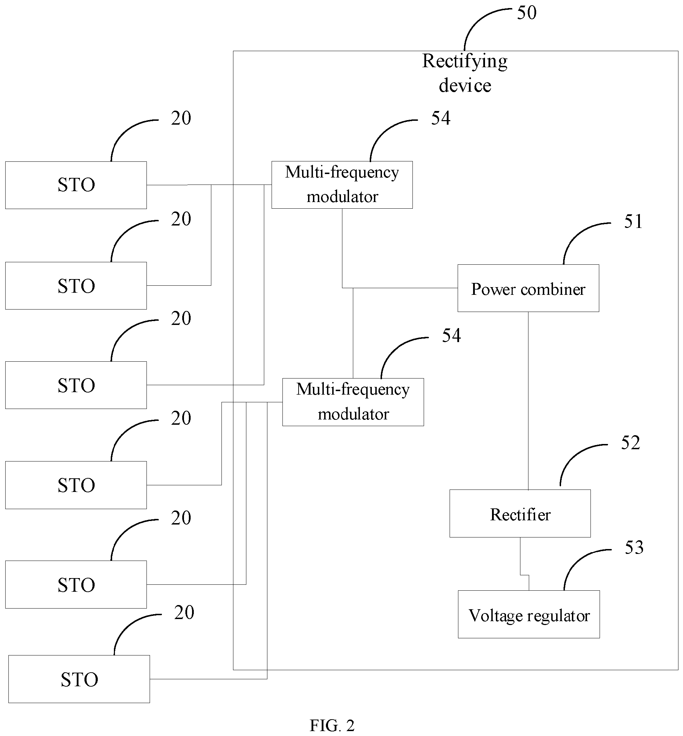

As shown in FIG. 2, a spin-polarized current flows through each STO 20 with a drive of the WiFi signal, thereby causing a motion of a magnetization direction in each STO 20, and generating a microwave signal corresponding to the motion frequency of each STO 20. Wherein each STO comprises a free magnetic layer, a reference magnetic layer and a fixed magnetic layer; a non-magnetic spacer layer is disposed between the free magnetic layer and the reference magnetic layer; when the spin-polarized current flows through the non-magnetic spacer layer, a spin moment is generated for a magnetization of the free magnetic layer; and when the spin moment exceeds a preset critical value, the magnetization direction of the free magnetic layer rotates around an direction of an effective magnetic field, thereby generating a microwave signal corresponding to the motion frequency.

The rectifying device 50 may comprise a rectifier 52 and a voltage regulator 53, wherein the microwave signal output by STO 20 and the extremely narrow millimeter wave are rectified into a DC electric signal by the rectifier 52; and the DC electric signal is regulated by the voltage regulator 53 to output a stable DC output signal.

In this way, it is possible to generate electrical energy with WiFi signals by means of a rectifier 50 without an external power supply.

The rectifying device 50 may also include a multi-frequency modulator 54 and a power combiner 51. The rectifying device 50 can select a corresponding modulation frequency and a corresponding amplitude according to an oscillation frequency and an output power of each STO, and convert microwave signals output by different STOs into microwave signals with a same frequency by a multi-frequency modulator, and

perform phase matching and power superposition on the microwave signals output by the multi-frequency modulator by a power combiner to obtain an aggregated microwave signal.

In this way, the energy aggregation can be carried out on the microwave signals output by a plurality of STOs to improve the output power of DC output signal. By means of multi-frequency modulator, the frequency mismatch problem and power imbalance problem between a plurality of STOs can effectively solved, which can improve the efficiencies of energy harvesting and utilization, and can reduce the number of connections and connection complexity between STO and other modules, thereby reducing equipment cost and volume.

The wireless charging equipment 100 can also comprise a positioning device 70 to scan an electronic equipment within a set range and determine a position and distance of the electronic equipment through the positioning device. The oscillation frequency of each STO is adjusted according to the position and the distance, wherein the oscillating frequency of each STO is adjusted by adjusting at least one of the following parameters: the rotational scale factor, the effective magnetic field strength, the anisotropic magnetic field strength, and the saturation magnetization intensity.

Wherein the positioning device 70 comprises at least one of the following: a beacon antenna 71, a laser radar sensor 72, a proximity sensor 73, an infrared sensor 74, an IEEE 802.11MC module 75, and an UWB device 76.

The beacon antenna can scan a signal from any electronic equipment, such as smart phone, smart watch, tablet, laptop, etc., in a 360-degree range. The LiDAR sensor 72 emits infrared beams to objects and calculates their distance and position based on the flight time of the rays of light, and can also make a three-dimensional map of space for facilitating calculations. The proximity sensor 73 and the infrared sensor 74 are used for detecting the proximity of the object and the human body, thereby realizing spatial positioning and human body sensing. The 802.11MC module determines an approximate position of the electronic equipment by detecting the signal strength of the electronic equipment. The ultra-wideband (UWB) device is used to detect the position of the electronic equipment and the position between the electronic equipment and the wireless charging equipment by Bluetooth communication within a range of tens of meters and other positioning devices. The wireless charging equipment can adjust the output power based on the data collected by the positioning device to protect humans from high-energy electromagnetic waves.

The positioning device 70 can be arranged on the rotating base to adjust the detection range of the positioning device.

Whether a person or object is approaching is detected by the infrared sensor and the proximity of person or object is detected by the proximity sensor. The charging module is controlled to suspend wirelessly charging the electronic equipment with electromagnetic wave using the DC output signal if a person or an object is detected within a preset distance. The infrared sensor can detect whether there is a person within one meter range of wireless charging equipment. When a person is detected, the infrared sensor can send a signal to main chip to suspend all power output, thereby protecting human body from the influence of electromagnetic wave.

The following describes in detail the wireless charging methods applied to the implementation of the above-mentioned wireless charging equipment.

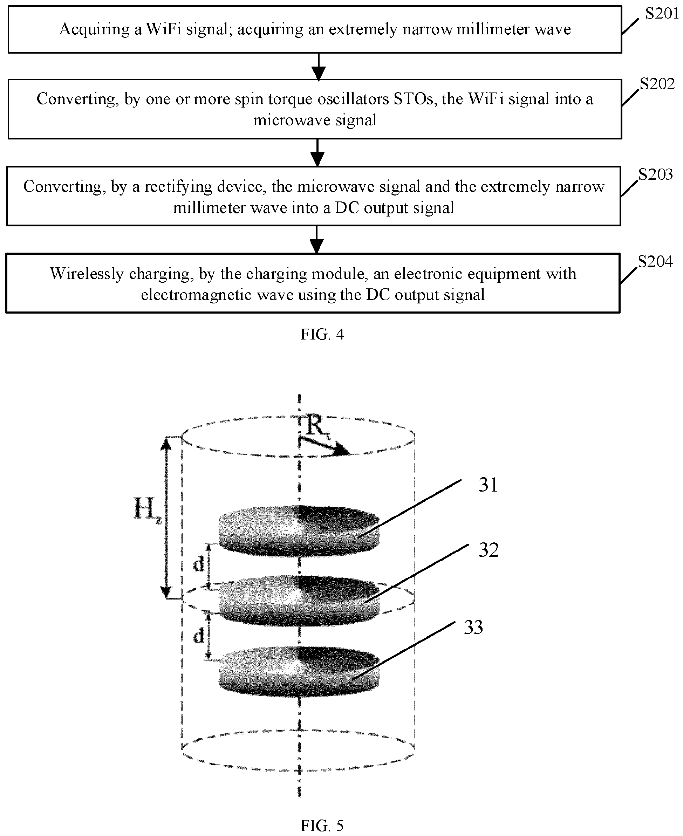

Referring to FIG. 4, which is a structure diagram of a wireless charging equipment provided by the embodiments of the present disclosure; The wireless charging method described in this embodiment is applied to a wireless charging equipment, and the method comprises the following steps:

S201, acquiring a WiFi signal; acquiring an extremely narrow millimeter wave.

Wherein, the wireless charging equipment can include a WiFi signal device and an extremely narrow millimeter wave device. The WiFi signal device can receive the WiFi signal transmitted from the WiFi signal receiving device by the WiFi signal receiving device, and can also receive the WiFi signal transmitted internally by the PCB circuit board. The extremely narrow millimeter wave device can receive the extremely narrow millimeter wave transmitted from the extremely narrow millimeter wave transmitting device by the extremely narrow millimeter wave receiving device, and can also receive the extremely narrow millimeter wave transmitted internally by the PCB circuit board.

In one embodiment, the WiFi signal receiving device 30 is used for receiving WiFi signals. The extremely narrow millimeter wave receiving device 40 is used for receiving extremely narrow millimeter waves. The WiFi signal receiving device can receive WiFi signals of different transmitting frequencies, such as at least one WiFi signal of 2.4GHz, 5GHz and 5.8GHz.

S202, converting, by one or more spin torque oscillators STOs, the WiFi signal into a microwave signal.

A spin-polarized current is driven to flow through each STO with a drive of the WiFi signal, thereby causing a motion of a magnetization direction in each STO, and generating a microwave signal corresponding to the motion frequency of each STO.

S203, converting, by a rectifying device, the microwave signal and the extremely narrow millimeter wave into a DC output signal.

Wherein, the microwave signal and the extremely narrow millimeter wave can be converted into a DC output signal by the rectifying device, hence the electric energy can be generated with the microwave signal and the extremely narrow millimeter wave, and the electric energy can be used to charge the electronic equipment.

S204, wirelessly charging, by the charging module, an electronic equipment with electromagnetic wave using the DC output signal.

In this solution, magnetic confinement energy focusing technology (MCEFT) and directional beamforming technology (DBT) can be used to transfer the DC output signal generated by the rectifying device, that is, the electrical energy, to the electronic equipment.

It can be seen that the wireless charging method and equipment are provided in the embodiments of the present application, in which the method comprises: acquiring a WiFi signal; acquiring an extremely narrow millimeter wave; converting, by one or more spin torque oscillator STOs, the WiFi signal into a microwave signal; converting, by a rectifying device, the microwave signal and the extremely narrow millimeter wave into a DC output signal; and wirelessly charging, by the charging module, an electronic equipment with electromagnetic wave using the DC output signal. Thereby, electric power is provided for smart phones, tablet computers, wearable devices, logistics industry, smart homes and even IOT systems, and convenient wireless charging solutions are provided for scenarios such as homes, offices, or public places.

Converting, by one or more spin torque oscillators STOs, the WiFi signal into a microwave signal comprises: causing a spin-polarized current to flow through each STO with a drive of the WiFi signal, thereby causing a motion of a magnetization direction in each STO, and generating a microwave signal corresponding to the motion frequency of each STO.

In the present application, a WiFi signal can be collected by STO and converted into energy. As shown in FIG. 5, which is a schematic diagram of the working principle of a STO, wherein STO is a device that uses a spin polarization current to drive a nanomagnet to produce high-frequency oscillation. One of structures of STO comprises three magnetic layers which are a free magnetic layer 31, a reference magnetic layer 32 and a fixed magnetic layer 33. A non-magnetic spacer layer is disposed between the free magnetic layer and the reference magnetic layer. When the spin-polarized current flows through the non-magnetic spacer layer, a spin moment is generated for a magnetization of the free magnetic layer. And when the spin moment exceeds a preset critical value, the magnetization direction of the free magnetic layer rotates around a direction of an effective magnetic field, which causes the resistance of the STO to change periodically, thereby generating a microwave signal corresponding to the motion frequency. In this solution, an input current can be set so that when the input current flows through a heavy metal layer (e.g., Pt) with strong spin-orbit coupling, the input current is converted to a spin-polarized current perpendicular to the direction of the current due to the spin Hall effect or the anti-spin Gavani effect.

The STO can collect WiFi signals, and the WiFi signals provide an applied magnetic field for the STO, that is, the STO is driven by the electromagnetic wave energy of the WiFi signal. The oscillation frequency of the STO can be controlled by adjusting the input current and the applied magnetic field.

The formula for converting the WiFi signal to the charging output by STO is as follows:

$$V_{DC} = \frac{1}{2} R_{STO} \left( \frac{V_{AC}}{R_{STO} + R_L} \right)^2 \sin^2 \theta$$

where $V_{DC}$ is the DC voltage, $R_{STO}$ is the resistance of the STO, $V_{AC}$ is the AC voltage, $R_L$ is the load resistance, and $\theta$ is the magnetization angle of the free magnetic layer and the reference magnetic layer.

Optionally, in the above step S202, converting, by a rectifying device, the microwave signal and the extremely narrow millimeter wave into a DC output signal comprises:

rectifying, by the rectifying device, the microwave signal output by STO and the extremely narrow millimeter wave into a DC electric signal; and

regulating, by a voltage regulator, the DC electric signal to output a stable DC output signal.

Wherein, the rectifier is used to convert the positive and negative half-cycles of an alternating current into a current in the same direction, and the voltage regulator is used to adjust an unstable voltage to a constant voltage, which is convenient for charging electronic equipment.

Optionally, a plurality of STOs are comprised, and the method further comprises:

selecting a corresponding modulation frequency and a corresponding amplitude according to an oscillation frequency and an output power of each STO, and converting, by a multi-frequency modulator, microwave signals output by different STOs into microwave signals with a same frequency; and

performing, by a power combiner, phase matching and power superposition on the microwave signals output by the multi-frequency modulator to obtain an aggregated microwave signal.

Wherein, a plurality of STOs can be connected to a multi-frequency modulator respectively. The corresponding modulation frequency and amplitude can be selected according to the oscillation frequency and output power of each STO by the multi-frequency modulator, and the microwave signal output by different STOs can be converted into microwave signals with the same frequency. Phase matching and power superposition can be carried out on a plurality of microwave signals output from the multi-frequency modulator by the power combiner, so as to realize energy aggregation, thereby improving the efficiency of energy harvesting and utilization, and increasing the output power. Further, the aggregated microwave signal can be input into the rectifier and rectified into a direct current signal.

Optionally, each STO comprises a free magnetic layer, a reference magnetic layer and a fixed magnetic layer; a non-magnetic spacer layer is disposed between the free magnetic layer and the reference magnetic layer; when the spin-polarized current flows through the non-magnetic spacer layer, a spin moment is generated for a magnetization of the free magnetic layer; and when the spin moment exceeds a preset critical value, the magnetization direction of the free magnetic layer rotates around an direction of an effective magnetic field, thereby generating a microwave signal corresponding to the motion frequency; the method further comprises:

acquiring a rotational scale factor, an effective magnetic field strength, an anisotropic magnetic field strength, and a saturation magnetization intensity of the magnetized rotational motion; and

determining the oscillation frequency of each of the STOs according to the rotation scale factor, the effective magnetic field strength, the anisotropic magnetic field strength, and the saturation magnetization intensity.

Wherein the specific formula for calculating the oscillation frequency of the STO is as follows:

$$f = \frac{\gamma}{2\pi}\sqrt{(H_{\text{eff}} + H_{\text{K}})(H_{\text{eff}} + H_{\text{K}} + M_{\text{s}})}$$

where f is the oscillation frequency of the STO, $\gamma$ is the rotational scale factor, $H_{\text{eff}}$ is the effective field strength, $H_{\text{K}}$ is the anisotropic field strength, Ms is the saturation magnetization intensity, and the effective field includes the applied magnetic field, the exchange field, the damping field and the self-rotating moment.

Optionally, the method further comprises:

acquiring a number of the STOs, a resistance and a load resistance of each STO, an AC voltage on each STO, and magnetization angles of the free magnetic layer and the reference magnetic layer; and
determine the output power of the STOs according to the number of the STOs, the resistance and the load resistance of each STO, the AC voltage on each STO, and the magnetization angles of the free magnetic layer and the reference magnetic layer.

The equation for output power can be expressed as follows:

$$P_{\text{DC}} = \frac{N^2 R_{\text{STO}}^2}{(NR_{\text{STO}}+R_{\text{L}})^2}\left(\frac{V_{\text{AC}}}{R_{\text{STO}}+R_{\text{L}}}\right)^2 \sin^2\theta$$

where $P_{\text{DC}}$ is the output power, N is the number of STOs, $R_{\text{STO}}$ is the resistance of the STO, $R_{\text{L}}$ is the load resistance, $V_{\text{AC}}$ is the AC voltage, and $\theta$ is the magnetization angle of the free magnetic layer and the reference magnetic layer.

It can be seen that, when the number of STOs is increased, the output power will change, because the number of STOs affects the resistance and voltage of the STO array. The output power is proportional to the square of the number of STOs, N, and increasing the number of STOs can increase the output power. However, this also increases the resistance of the STO array, thus reducing the rectification efficiency. Therefore, to achieve the best output power and rectification efficiency, it is necessary to find a balance between the number of STOs and the magnitude of the resistance.

Optionally, the method further comprises:
transmitting the extremely narrow millimeter wave by a plurality of antenna boards, wherein each antenna board comprises a plurality of millimeter wave transmitting chips, and the plurality of antenna boards are arranged at different angles.

Wherein, the phased array antenna board comprises a plurality of antenna boards which each comprises a plurality of millimeter-wave transmitting chips. The plurality of antenna boards are arranged at different angles, which can broaden the transmission range. For example, 5 antenna boards can be combined together, each of which comprises 256 millimeter-wave transmitting chips, hence the phased array antenna board may include 1280 millimeter-wave transmitting chips. By arranging the plurality of antenna boards at different angles, the transmitting range of millimeter-wave can be increased. For another example, the phased array antenna board may include 5 antenna boards, each of which may include 1280 millimeter-wave transmitting chips, and 5 antenna boards are arranged at 5 different angles, therefore a total of 6400 millimeter wave transmitting chips transmit extremely narrow millimeter waves.

Optionally, the method further comprises:

scanning the electronic equipment within a set range by a positioning device, and determining a position and a distance of the electronic equipment;
adjusting the oscillation frequency of each STO according to the position and the distance, wherein the oscillating frequency of each STO is adjusted by adjusting at least one of the following parameters: the rotational scale factor, the effective magnetic field strength, the anisotropic magnetic field strength, and the saturation magnetization intensity.

Wherein, the oscillation frequency of STO can be determined according to the position and distance of the electronic equipment. The closer the electronic equipment, the smaller the oscillation frequency, and the farther the electronic equipment, the greater the oscillation frequency. The positioning device comprises at least one of the following: beacon antenna, LiDAR sensor, proximity sensor, infrared sensor, electrical and IEEE 802.11MC module and UWB device. The beacon antenna can scan a signal from any electronic equipment, such as smart phone, smart watch, tablet, laptop, etc., in a 360-degree range. The LiDAR sensor emits infrared beams to objects and calculates their distance and position based on the flight time of the rays of light. The proximity sensor and the infrared sensor are used for detecting the proximity of the object and the human body, thereby realizing spatial positioning and human body sensing. The 802.11MC module determines an approximate position of the electronic equipment by detecting the signal strength of the electronic equipment. The UWB device is used to detect the position of the electronic equipment and the position between the electronic equipment and the wireless charging equipment by Bluetooth communication within a range of tens of meters and other positioning devices. The wireless charging equipment can adjust the output power based on the data collected by the positioning device to protect humans from high-energy electromagnetic waves.

Optionally, the phased array antenna board and the positioning device are disposed on a rotating base, and the method further comprises: controlling the rotating base to rotate to adjust an emission angle of the phased array antenna board and a detection range of the positioning device.

Optionally, the method further comprises: detecting whether a person or an object is approaching by the infrared sensor; detecting a proximity of the person or the object by the proximity sensor; controlling the devices, charging module to suspend wirelessly charging the electronic equipment with electromagnetic wave using the DC output signal if a person or an object is detected within a preset distance. The infrared sensor can detect whether there is a person within one meter range of wireless charging equipment. When a person is detected, the infrared sensor can send a signal to main chip to suspend all power output, thereby protecting human body from the influence of electromagnetic wave.

Optionally, the method further comprises:

adjusting an output power of the STOs according to a signal strength of the WiFi signal, wherein adjusting the output power of the STOs by adjusting a number of the STO.

Wherein, the transmission distance of WiFi signal is determined according to the signal strength of the WiFi signal. When the Wi-Fi signal is about 0-30dB, it will be identified as a short distance. When it is about 31-45dB, it will be recognized as a medium range distance. When it is about 46-60dB or higher, it may be considered a long distance. The corresponding output power of the STO can be adjusted for different distance ranges to ensure that the output power of the DC signal meets the charging needs of the long distance range.

The equation for output power can be expressed as follows:

$$P_{DC} = \frac{N^2 R_{STO}^2}{(NR_{STO}+R_L)^2} \left( \frac{V_{AC}}{R_{STO}+R_L} \right)^2 \sin^2 \theta$$

where $P_{DC}$ is the output power, N is the number of STOs, $R_{STO}$ is the resistance of the STO, $R_L$ is the load resistance, $V_{AC}$ is the AC voltage, and $\theta$ is the magnetization angle of the free magnetic layer and the reference magnetic layer.

It can be seen that, when the number of STOs is increased, the output power will change, because the number of STOs affects the resistance and voltage of the STO array. The output power is proportional to the square of the number of STOs, N, and increasing the number of STOs can increase the output power. However, this also increases the resistance of the STO array, thus reducing the rectification efficiency. Therefore, to achieve the best output power and rectification efficiency, it is necessary to find a balance between the number of STOs and the magnitude of the resistance.

Optionally, the method further comprises:

acquiring a network usage rate of the electronic equipment;
determining a target usage rate range in which a network usage rate is located if the network usage rate is less than or equal to a first preset value;
determining the target rectification efficiency range corresponding to the target usage rate range;
adjust the number of the STOs so that the rectification efficiency of the rectifying device reaches the target rectification efficiency range.

Wherein, the network usage rate of the electronic equipment connected with the wireless charging equipment can be detected. For example, if the network usage rate is greater than 70%, the WiFi energy conversion is not carried out, that is, the operation of "converting the WiFi signal into a microwave signal by a spin torque oscillator STO; converting the microwave signal into a DC output signal by a rectifying device", while the extremely narrow millimeter wave can be converted into a DC output signal by the rectifying device to carry out wireless charging with the extremely narrow millimeter wave. If the network usage rate is at 50%- 70%, 40-50% rectification efficiency can be set when energy loss is considered, and 60-80% rectification efficiency can be set when the network usage is less than 20%.

Wherein, the rectifier can include a rectifying antenna, and the rectification efficiency of the rectifying antenna is related to the shape and size of the antenna, the material and structure of the rectifier and other factors, which can be expressed by the following equation:

$$\eta = \frac{P_{DC}}{P_{RF}} = \frac{\pi}{4} \left( \frac{\lambda}{L} \right)^2 \left( \frac{V_0}{V_t} \right)^2 \exp\left( -\frac{V_0}{V_t} \right)$$

where $\eta$ is the rectification efficiency, $P_{DC}$ is the DC power, $P_{RF}$ is the radio frequency power, $\lambda$ is the wavelength of the radio wave, L is the length of the antenna, $V_0$ is the output voltage of the rectifier, and Vt is the critical voltage of the rectifier.

Rectification can also be performed via STO. The rectification efficiency of the STO array is related to the number of STOs, connection methods, sizes, materials and other factors, which can be expressed by the following equations:

$$\eta = \frac{P_{DC}}{P_{RF}} = \frac{V_{DC}^2}{R_L P_{RF}} = \frac{N^2 R_{STO}^2}{(N R_{STO} + R_L)^2} \sin^2 \theta$$

where $\eta$ is the rectification efficiency, $P_{DC}$ is the DC power, $P_{RF}$ is the RF power, $V_{DC}$ is the DC voltage, $R_L$ is the load resistance, N is the number of STOs, $R_{STO}$ is the resistance of the STO, and $\theta$ is the magnetization angle of the free magnetic layer and the reference magnetic layer.

To increase the rectification efficiency, it is necessary to increase the DC power or decrease the radio power. The DC power can be increased by increasing the number of STOs, adjusting the applied current or applied magnetic field, selecting appropriate materials and structures, etc. The RF power can be reduced by setting up sensitive and adapted antennas, reducing signal loss and interference, etc.

Optionally, a wireless charging equipment comprises a transmitting device, and the transmitting device comprises an iron-nitrogen permanent magnet, wirelessly charging, by the charging module, and the step of wirelessly charging, by the charging module, an electronic equipment with electromagnetic wave using the DC output signal comprises:

transmitting the DC output signal to the transmitting device by the charging module;
focusing, in the form of magnetic confinement, the DC output signal in the form of electromagnetic wave by the iron-nitrogen permanent magnet and transmitting the electromagnetic wave to the electronic equipment.

Magnetic confinement energy focusing technology can be adopted to the transmitting device. A stable magnetic field can be formed by the magnetization effect of the iron-nitrogen permanent magnets of the transmitting device. Because the iron-nitrogen permanent magnet has high magnetic moment and high stubborn magnetic force, the magnetic field trajectory of the emitted electromagnetic wave is changed. The electromagnetic wave is magnetized after changing the trajectory, and then transmitted to the electronic equipment to achieve long-distance wireless charging.

Optionally, the charging module comprises a transmitting device, and the transmitting device comprises an iron-nitrogen permanent magnet, wirelessly charging, by the charging module, and the step of wirelessly charging, by the charging module, an electronic equipment with electromagnetic wave using the DC output signal comprises:

focusing, in the form of magnetic confinement, the DC output signal in the form of electromagnetic wave by the iron-nitrogen permanent magnet and transmitting the electromagnetic wave to the electronic equipment.

Wherein, magnetic confinement energy focusing technology can be adopted to the charging module. A stable magnetic field can be formed by the magnetization effect of the iron-nitrogen permanent magnets of the charging module. Because the iron-nitrogen permanent magnet has high magnetic moment and high stubborn magnetic force, the magnetic field trajectory of the emitted electromagnetic wave is changed. The electromagnetic wave is magnetized after changing the trajectory, and then transmitted to the electronic equipment to achieve long-distance wireless charging.

By employing an iron-nitrogen permanent magnet to focus in the form of magnetic confinement the DC output signal in the form of electromagnetic waves, and transmit to an electronic equipment. The iron-nitrogen permanent magnet has a higher magnetic energy output and coercivity, and can realize higher-precision magnetic induction. As a magnetic transmission medium, the iron-nitrogen permanent magnet can realize more efficient energy transmission and control, and realize more efficient, longer-distance, higher-power wireless charging. For example, wireless charging can be provided for multiple electronic equipment within a range of 5-7 meters.

Iron-nitrogen permanent magnets can include R2Fe17, R2Fe17Nx, or R2Fe17xH. Iron-nitrogen permanent magnets are manufactured through mechanical alloying, rapid solidification, and jet deposition to achieve controllable, efficient, and low-cost material manufacturing, thereby reducing costs. The performance of iron-nitrogen permanent magnets can be optimized by controlling grain size, lattice distortion and magnetic anisotropy. Iron-nitrogen permanent magnets have higher magnetic energy output and coercivity, which can achieve higher precision magnetic induction. Iron-nitrogen permanent magnets as magnetic transmission mediums can be controlled by non-contact electric field control technology and temperature control technology to control their magnetic vector direction and transform into a magnon-induced magnetic state. Energy transfer and control can be achieved by changing the strength and direction of the external magnetic field and the internal temperature of the iron-nitrogen permanent magnet. Due to the advantages of high coercivity and high magnetic anisotropy, iron-nitrogen permanent magnets can achieve more efficient energy transmission and control. In addition, fast charging and energy-saving advantages can also be realized. By changing the magnetic field, direction and temperature of iron-nitrogen permanent magnets, the energy beam of the DC output signal is focused in the form of magnetic confinement and released to the electronic equipment for charging. Due to the concentrated emission of energy, more efficient, longer-range, and higher-power wireless charging can be realized, improving convenience compared to existing technologies.

In addition to the use of electric field control technology and temperature control technology, wireless charging can also be achieved through spin-orbit coupling and spin polarization. Energy can be transferred by using the interaction of spin and orbital angular momentum in iron-nitrogen permanent magnets and the spin polarization effect. The interaction of spin and orbital angular momentum can transfer energy into nitrogen atoms, resulting in a spin polarization effect, which can form a spin polarization layer on the surface of iron-nitrogen permanent magnets, and generate a magnetic field on its surface, thereby realizing wireless charging. The spin-orbit coupling and spin polarization effect of iron-nitrogen permanent magnets can achieve efficient energy transfer, thereby improving charging efficiency and speed. Also, the cost of iron-nitrogen permanent magnets is relatively low, which can be mass-produced, reducing the cost of wireless charging.

Electromagnetic induction is utilized in most wireless charging solutions available today, wherein a coil is embedded in a charging board or charging pad, and an equipment equipped with a compatible receiver coil needs to be placed directly on the charging surface to initiate power transfer. While this method does not require a physical cable, it still requires the equipment to remain in direct contact with the charging surface. This restriction can be inconvenient, as users must carefully align the equipment with the charging board and ensure that they remain in the correct position throughout the charging process. The situation is even more complicated when charging multiple equipment at the same time or when using an equipment while charging. This solution enables wireless charging without direct physical contact with the charging surface by using iron-nitrogen permanent magnets.

Optionally, the method is applied to a wireless charging equipment comprising a plurality of transmitting devices, and the plurality of transmitting devices constitute a plurality of network nodes for AI mesh networking in the AI mesh networking mode; the method further comprises:

transmitting the DC output signal to at least part of the plurality of transmitting devices by the charging module; wirelessly charging the electronic equipment by the at least part of the plurality of transmitting devices in the AI mesh networking mode.

Mesh networking is a kind of network based on wireless sensor. Generally speaking, under the Mesh networking protocol, Mesh networking consists of a plurality of network nodes to form a network, in which network nodes communicate with each other, so as to form a network with self-organizing and self-repairing capabilities. In the Mesh networking protocol, each network node can be used as a router and terminal equipment. In the AI mesh networking mode, AI Mesh networking can be composed of a plurality of routing devices, so as to provide a larger range of wireless network. There is one primary routing device among the multiple routing devices, which is set to the AI mesh networking mode, and other routing devices can join the AI mesh networking, so as to achieve a wider range of wireless charging range coverage through multiple routing devices. In this solution, the AI mesh networking technology is used to realize a wider range of wireless charging services through multiple transmitting devices, and each transmitting device can wirelessly charge multiple electronic equipment at the same time, so that a larger number of electronic equipment can be charged at the same time.

In the AI mesh networking mode, one transmitting device and other multiple transmitting devices connect all extremely narrow millimeter wave and WiFi signals. AI mesh networking technology can realize the extended mesh network function, realize the expansion of Wi-Fi signal coverage, Wi-Fi energy transfer and increasing of the output power of wireless charging, which can improve network performance and wireless charging resource management, and provide a better user experience. In the Mesh networking mode, a plurality of wireless charging equipment are connected to each other to achieve the expansion of Wi-Fi signal coverage, Wi-Fi energy transfer and increasing of the output power of wireless charging. The number of transmitting devices can be increased, and each transmitting device can charge multiple electronic equipment.

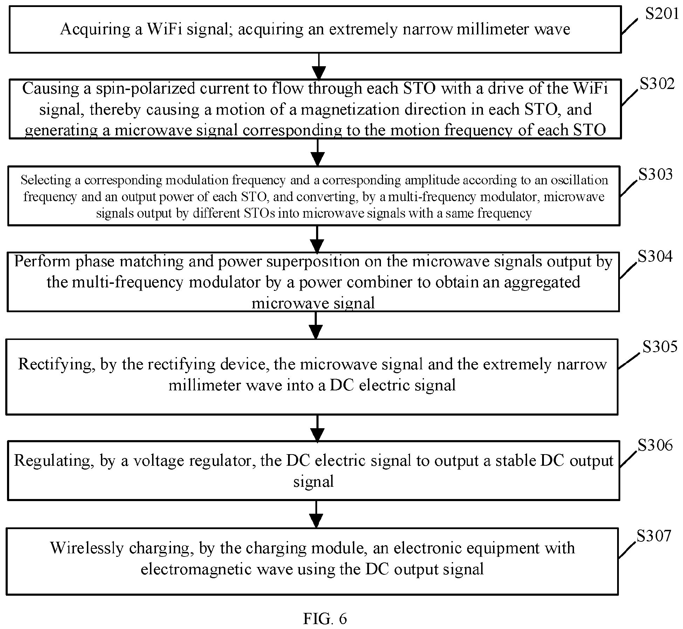

For the content consistent with the embodiment shown in FIG. 4, please refer to FIG. 6, which is a flow chart of a second wireless charging equipment provided by the embodiments of the present disclosure. As shown in FIG. 6, the wireless charging method comprises:

S301, acquiring a WiFi signal; acquiring an extremely narrow millimeter wave.
S302, causing a spin-polarized current to flow through each STO with a drive of the WiFi signal, thereby causing a motion of a magnetization direction in each STO, and generating a microwave signal corresponding to the motion frequency of each STO.
S303, selecting a corresponding modulation frequency and a corresponding amplitude according to an oscillation frequency and an output power of each STO, and converting, by a multi-frequency modulator, microwave signals output by different STOs into microwave signals with a same frequency.

S304, perform phase matching and power superposition on the microwave signals output by the multi-frequency modulator by a power combiner to obtain an aggregated microwave signal.

S305, rectifying, by the rectifying device, the microwave signal and the extremely narrow millimeter wave into a DC electric signal.

S306, regulating, by a voltage regulator, the DC electric signal to output a stable DC output signal.

S307, wirelessly charging, by the charging module, an electronic equipment with electromagnetic wave using the DC output signal.

The specific implementation details of the above steps can refer to the specific details of the above embodiments, and will not be repeated here.

It can be seen that in the embodiments of the present application, a WiFi signal can be collected by adopting the STO and converted into energy. The STO can convert a WiFi signal into a microwave signal. A plurality of STOs can be connected to a multi-frequency modulator respectively. The corresponding modulation frequency and amplitude can be selected according to the oscillation frequency and output power of each STO by the multi-frequency modulator, and the microwave signal output by different STOs can be converted into microwave signals with the same frequency. Phase matching and power superposition can be carried out on a plurality of microwave signals output from the multi-frequency modulator by the power combiner, so as to realize energy aggregation, thereby improving the efficiency of energy harvesting and utilization, and increasing the output power. Further, the aggregated microwave signal can be input into the rectifier and rectified into a direct current signal.

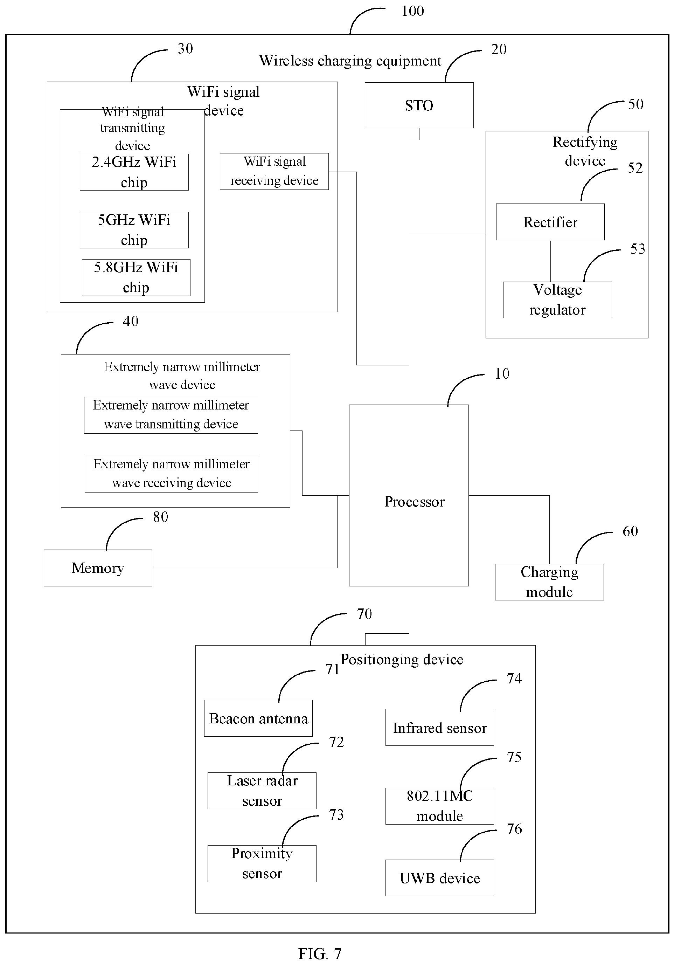

For the content consistent with the embodiment shown in FIGS. 1-6, please refer to FIG. 7, which is a structure diagram of another wireless charging equipment provided by the embodiments of the present disclosure. The wireless charging equipment comprises a WiFi signal receiving device 30, a millimeter wave receiving device 40, a rectifying device 50, a charging module 60, processor 10 and memory 80, and one or more programs, in which the one or more programs are stored in the memory. The memory 80 may be high-speed RAM memory or non-volatile memory, such as disk storage. The above memory 80 is used for storing a set of program codes, and the processor 10 is used for calling program codes stored in memory 80, and performing the following operation:

acquiring a WiFi signal; acquiring an extremely narrow millimeter wave;

converting, by one or more spin torque oscillators STOs, the WiFi signal into a microwave signal;

converting, by a rectifying device, the microwave signal and the extremely narrow millimeter wave into a DC output signal; and

wirelessly charging, by the charging module, an electronic equipment with electromagnetic wave using the DC output signal.

Optionally, as for converting, by a rectifying device, the microwave signal and the extremely narrow millimeter wave into a DC output signal, the above-mentioned processor 10 is specifically used for:

rectifying, by the rectifying device, the microwave signal and the extremely narrow millimeter wave into a DC electric signal; and

regulating, by a voltage regulator, the DC electric signal to output a stable DC output signal.

Optionally, a plurality of STOs are comprised, and the is also used for:

selecting a corresponding modulation frequency and a corresponding amplitude according to an oscillation frequency and an output power of each STO, and converting, by a multi-frequency modulator, microwave signals output by different STOs into microwave signals with a same frequency; and

performing, by a power combiner, phase matching and power superposition on the microwave signals output by the multi-frequency modulator to obtain an aggregated microwave signal.

Optionally, converting, by one or more spin torque oscillators STOs, the WiFi signal into a microwave signal comprises:

A spin-polarized current flow through each STO with the drive of the WiFi signal, thereby causing a motion of a magnetization direction in each STO, and generating a microwave signal corresponding to the motion frequency of each STO. Each STO comprises a free magnetic layer, a reference magnetic layer and a fixed magnetic layer; a non-magnetic spacer layer is disposed between the free magnetic layer and the reference magnetic layer; when the spin-polarized current flows through the non-magnetic spacer layer, a spin moment is generated for a magnetization of the free magnetic layer; and when the spin moment exceeds a preset critical value, the magnetization direction of the free magnetic layer rotates around an direction of an effective magnetic field, thereby generating a microwave signal corresponding to the motion frequency. the above-mentioned processor 10 is also used for:

acquiring a rotational scale factor, an effective magnetic field strength, an anisotropic magnetic field strength, and a saturation magnetization intensity of the magnetized rotational motion; and
determining the oscillation frequency of each of the STOs according to the rotation scale factor, the effective magnetic field strength, the anisotropic magnetic field strength, and the saturation magnetization intensity.

Optionally, the above-mentioned processor 10 is also used for:

acquiring a number of the STOs, a resistance and a load resistance of each STO, an AC voltage on each STO, and magnetization angles of the free magnetic layer and the reference magnetic layer; and
determine the output power of the STOs according to the number of the STOs, the resistance and the load resistance of each STO, the AC voltage on each STO, and the magnetization angles of the free magnetic layer and the reference magnetic layer.

Optionally, the wireless charging equipment further comprises a phased array antenna board, and the above-mentioned processor 10 is also used for:
transmitting the extremely narrow millimeter wave by a plurality of antenna boards, wherein each antenna board comprises a plurality of millimeter wave transmitting chips, and the plurality of antenna boards are arranged at different angles.

Optionally, the wireless charging equipment further comprises a positioning device, and the above-mentioned processor 10 is also used for:

scanning the electronic equipment within a set range by a positioning device, and determining a position and a distance of the electronic equipment;
adjusting the oscillation frequency of each STO according to the position and the distance, wherein the oscillating frequency of each STO is adjusted by adjusting at least one of the following parameters: the rotational scale factor, the effective magnetic field strength, the anisotropic magnetic field strength, and the saturation magnetization intensity.

The positioning device comprises at least one of the following: a beacon antenna, a laser radar sensor, a proximity sensor, an infrared sensor, an 802.11MC module, and an ultra-wideband UWB device.

Optionally, the phased array antenna board and the positioning device are disposed on a rotating base, and the above-mentioned processor 10 is also used for: controlling the rotating base to rotate to adjust an emission angle of the phased array antenna board and a detection range of the positioning device.

Optionally, the above-mentioned processor 10 is also used for:

detecting whether a person or an object is approaching by the infrared sensor; detecting a proximity of the person or the object by the proximity sensor;
controlling the charging module to suspend wirelessly charging the electronic equipment with electromagnetic wave using the DC output signal if a person or an object is detected within a preset distance.

Optionally, the above-mentioned processor 10 is also used for: adjusting an output power of the STOs according to a signal strength of the WiFi signal, wherein adjusting the output power of the STOs by adjusting a number of the STO.

Optionally, the above-mentioned processor 10 is also used for:

acquiring a network usage rate of the electronic equipment;
determining a target usage rate range in which a network usage rate is located if the network usage rate is less than or equal to a first preset value;
determining the target rectification efficiency range corresponding to the target usage rate range;
adjust the number of the STOs so that the rectification efficiency of the rectifying device reaches the target rectification efficiency range.

Optionally, the charging module comprises an iron-nitrogen permanent magnet, and as for wirelessly charging, by the charging module, an electronic equipment with electromagnetic wave using the DC output signal, the above-mentioned processor 10 is also used for:
focusing, in the form of magnetic confinement, the DC output signal in the form of electromagnetic wave by the iron-nitrogen permanent magnet and transmitting the electromagnetic wave to the electronic equipment.

Optionally, a wireless charging equipment comprises a transmitting device, and the transmitting device comprises an iron-nitrogen permanent magnet. As for wirelessly charging, by the charging module, and the step of wirelessly charging, by the charging module, an electronic equipment with electromagnetic wave using the DC output signal, the above-mentioned processor 10 is also used for: transmitting the DC output signal to the transmitting device by the charging module; focusing, in the form of magnetic confinement, the DC output signal in the form of electromagnetic wave by the iron-nitrogen permanent magnet and transmitting the electromagnetic wave to the electronic equipment.

Optionally, the method is applied to a wireless charging equipment comprising a plurality of transmitting devices, and the plurality of transmitting devices constitute a plurality of network nodes for AI mesh networking in the AI mesh networking mode; the method further comprises:

transmitting the DC output signal to at least part of the plurality of transmitting devices by the charging module; wirelessly charging the electronic equipment by the at least part of the plurality of transmitting devices in the AI mesh networking mode.

It can be seen that acquiring a WiFi signal; acquiring an extremely narrow millimeter wave; converting, by one or more spin torque oscillator STOs, the WiFi signal into a microwave signal; converting, by a rectifying device, the microwave signal and the extremely narrow millimeter wave into a DC output signal; and wirelessly charging, by the charging module, an electronic equipment with electromagnetic wave using the DC output signal. Thereby, wireless charging via WiFi signal and extremely narrow millimeter wave is realized, and electric power is provided for smart phones, tablet computers, wearable devices, logistics industry, smart homes and even IOT systems, and convenient wireless charging solutions are provided for scenarios such as homes, offices, or public places.

The embodiments of the present application further provide a computer storage medium, wherein the computer storage medium stores computer programs for electronic data interchange, wherein the computer programs cause the computer to perform some or all of the steps described in the methods of the embodiments of the present application, wherein the above-mentioned computer comprises a mobile terminal.

The embodiments of the present application further provide a computer program product, wherein the computer program product comprises a non-instantaneous computer-readable storage medium in which the computer programs is stored, and the computer programs can be executed to enable the computer to perform some or all of the steps described in the methods of the embodiments of the present application The computer program product can be a software installation package, and the above-mentioned computer comprises a mobile terminal.

It should be noted that, for the sake of simplicity, for the sake of simple description, the embodiments of each method described are all expressed as a series of combinations of actions, but those skilled in the art should be aware that the present application is not limited by the described sequence of actions, because according to the present application, some steps may be carried out in other sequences or at the same time. Next, those skilled in the art should also be aware that the embodiments described in the specification are preferred embodiments, and the actions and modules involved are not necessarily necessary for the present application.

In the above embodiments, the description of each embodiment has its own emphasis, and the part not described in detail in one embodiment may refer to the relevant description of other embodiments.

In several embodiments provided in the present application, it should be understood that the device disclosed may be realized by other means. For example, the device embodiments described above are only schematic, for example, the division of the above units is only a logical function division, and there can be another division in the actual implementation, such as a plurality of units or components can be combined or can be integrated into another system, or some features can be ignored or not executed. On the other hand, the coupling or direct coupling or communication connection between each other shown or discussed can be through the indirect coupling or communication connection of some interface, device or unit, which may be electrical or otherwise.

The above-mentioned units described as a separate component may or may not be physically separated, the component displayed as a unit may or may not be a physical unit, i.e., may be in one place, or may also be distributed on a plurality of network units. Some or all of the units can be selected according to actual needs to achieve the purpose of the solution of this embodiment.

In addition, each functional unit in each embodiment of the present application may be integrated in a control unit, or each unit may exist physically separately, or two or more units may be integrated in a single unit. The above-mentioned integrated units can be implemented either in the form of hardware or in the form of software function units.

The above-mentioned integrated units can be stored in a computer-readable memory if they are implemented as software function units and sold or used as stand-alone products. Based on this understanding, the technical solution of the present application may be embodied in the form of a software product in essence, or the part that contributes to the prior art, or all or part of the technical solution, which is stored in a memory and includes instructions to enable a computer device (which may be a personal computer, a server or a network device, etc.) to perform all or part of the steps of the method described above in each embodiment of the present application. The aforementioned memory includes: USB flash drive, read-only memory (ROM), random access memory (RAM), portable hard disk, disk or optical disc and other media that can store program code.

A person skilled in the art may understand that all or part of the steps in the various methods of the above embodiments can be completed by instructing the relevant hardware through a program, and the program may be stored in a computer-readable memory, and the memory may include: a flash disk, a read-only memory (abbreviated as: ROM), a random access memory (abbreviated: RAM), a disk or a CD-ROM, etc.

The above embodiments of the present application are described in detail, and the principle and embodiment of the present application are elaborated by applying specific examples in this paper, and the description of the above embodiments is only used to help understand the method and core idea of the present application; at the same time, for those skilled in the art, according to the idea of the present application, there will be changes in the specific embodiment and the scope of application, and in summary, the contents of this specification should not be understood as a restriction on the present application.

## Claims

1. A wireless charging method, comprising the following steps:

   acquiring a WiFi signal;
   acquiring an extremely narrow millimeter wave;
   converting, by one or more spin torque oscillators STOs, the WiFi signal into a microwave signal;
   converting, by a rectifying device, the microwave signal and the extremely narrow millimeter wave into a DC output signal; and
   wirelessly charging, by the charging module, an electronic equipment with electromagnetic wave using the DC output signal.

2. The wireless charging method according to claim 1, wherein the step of converting the microwave signals and the extremely narrow millimeter waves into DC output signals by a rectifying device comprises:

   rectifying, by the rectifying device, the microwave signal and the extremely narrow millimeter wave into a DC electric signal; and
   regulating, by a voltage regulator, the DC electric signal to output a stable DC output signal.

3. The wireless charging method according to claim 1, wherein the method further comprises:

   selecting a corresponding modulation frequency and a corresponding amplitude according to an oscillation frequency and an output power of each STO, and converting, by a multi-frequency modulator, microwave signals output by different STOs into microwave signals with a same frequency; and
   performing, by a power combiner, phase matching and power superposition on the microwave signals output by the multi-frequency modulator to obtain an aggregated microwave signal.

4. The wireless charging method according to claim 3, wherein the step of converting, by one or more spin torque oscillators STOs, the WiFi signal into a microwave signal comprises:

   causing a spin-polarized current to flow through each STO with a drive of the WiFi signal, thereby causing a motion of a magnetization direction in each STO, and generating a microwave signal corresponding to the motion frequency of each STO;
   wherein each STO comprises a free magnetic layer, a reference magnetic layer and a fixed magnetic layer; a non-magnetic spacer layer is disposed between the free magnetic layer and the reference magnetic layer; when the spin-polarized current flows through the non-magnetic spacer layer, a spin moment is generated for a magnetization of the free magnetic layer; and when the spin moment exceeds a preset critical value, the magnetization direction of the free magnetic layer rotates around an direction of an effective magnetic field, thereby generating a microwave signal corresponding to the motion frequency; the method further comprises:

   acquiring a rotational scale factor, an effective magnetic field strength, an anisotropic magnetic field strength, and a saturation magnetization intensity of the magnetized rotational motion; and
   determining the oscillation frequency of each of the STOs according to the rotation scale factor, the effective magnetic field strength, the anisotropic magnetic field strength, and the saturation magnetization intensity.

**5.** The wireless charging method according to claim 4, wherein the method further comprises:

> acquiring a number of the STOs, a resistance and a load resistance of each STO, an AC voltage on each STO, and magnetization angles of the free magnetic layer and the reference magnetic layer; and
> determine the output power of the STOs according to the number of the STOs, the resistance and the load resistance of each STO, the AC voltage on each STO, and the magnetization angles of the free magnetic layer and the reference magnetic layer.

**6.** The wireless charging method according to any one of claims 1-5, wherein the method further comprises:
transmitting the extremely narrow millimeter wave by a plurality of antenna boards, wherein each antenna board comprises a plurality of millimeter wave transmitting chips, and the plurality of antenna boards are arranged at different angles.

**7.** The wireless charging method according to claim 6, wherein the method further comprises:

> scanning the electronic equipment within a set range by a positioning device, and determining a position and a distance of the electronic equipment;
> adjusting the oscillation frequency of each STO according to the position and the distance, wherein the oscillating frequency of each STO is adjusted by adjusting at least one of the following parameters: the rotational scale factor, the effective magnetic field strength, the anisotropic magnetic field strength, and the saturation magnetization intensity.

**8.** The wireless charging method according to claim 7, wherein the positioning device comprises at least one of the following: a beacon antenna, a laser radar sensor, a proximity sensor, an infrared sensor, an 802.11MC module, and an ultra-wideband UWB device.

**9.** The wireless charging method according to claim 7, wherein the phased array antenna board and the positioning device are disposed on a rotating base, and the method further comprises:
controlling the rotating base to rotate to adjust an emission angle of the phased array antenna board and a detection range of the positioning device.

**10.** The wireless charging method according to claim 8, wherein the method further comprises: detecting whether a person or an object is approaching by the infrared sensor; detecting a proximity of the person or the object by the proximity sensor;
controlling the charging module to suspend wirelessly charging the electronic equipment with electromagnetic wave using the DC output signal if a person or an object is detected within a preset distance.

**11.** The wireless charging method according to any one of claims 1-5, wherein the method further comprises:
adjusting an output power of the STOs according to a signal strength of the WiFi signal, wherein adjusting the output power of the STOs by adjusting a number of the STO.

**12.** The wireless charging method according to any one of claims 1-5, wherein the method further comprises:

> acquiring a network usage rate of the electronic equipment;
> determining a target usage rate range in which a network usage rate is located if the network usage rate is less than or equal to a first preset value;
> determining the target rectification efficiency range corresponding to the target usage rate range;
> adjust the number of the STOs so that the rectification efficiency of the rectifying device reaches the target rectification efficiency range.

**13.** The wireless charging method according to any one of claims 1-5, wherein the charging module comprises an iron-nitrogen permanent magnet, and the step of wirelessly charging, by the charging module, an electronic equipment with electromagnetic wave using the DC output signal comprises:

> focusing, in the form of magnetic confinement, the DC output signal in the form of electromagnetic wave by the iron-nitrogen permanent magnet and transmitting the electromagnetic wave to the electronic equipment;
> or
> wherein the method is applied to a wireless charging equipment comprising a transmitting device, and the transmitting device comprises an iron-nitrogen permanent magnet, wirelessly charging, by the charging module, and the step of wirelessly charging, by the charging module, an electronic equipment with electromagnetic wave using the DC output signal comprises:

transmitting the DC output signal to the transmitting device by the charging module;
focusing, in the form of magnetic confinement, the DC output signal in the form of electromagnetic wave by the iron-nitrogen permanent magnet and transmitting the electromagnetic wave to the electronic equipment.

14. The wireless charging method according to any one of claims 1-5, wherein the method is applied to a wireless charging equipment comprising a plurality of transmitting devices, and the plurality of transmitting devices constitute a plurality of network nodes for AI mesh networking in the AI mesh networking mode; the method further comprises:

transmitting the DC output signal to at least part of the plurality of transmitting devices by the charging module;
wirelessly charging the electronic equipment by the at least part of the plurality of transmitting devices in the AI mesh networking mode.

15. A wireless charging equipment, comprising:

a WiFi signal device for acquiring a WiFi signal;
one or more spin torque oscillator STOs for converting the WiFi signal into a microwave signal;
an extremely narrow millimeter wave device for acquiring an extremely narrow millimeter wave;
a rectifying device for converting the WiFi signal into a DC output signal; and
a charging module for wirelessly charging an electronic equipment with electromagnetic wave using the DC output signal and the extremely narrow millimeter wave.

16. A computer-readable storage medium on which computer programs are stored, wherein when the computer programs are executed by a processor, the steps of the wireless charging method of any one of claims 1-14 are implemented.

FIG. 1

50

Rectifying
device

20

STO

20

STO

20

STO

20

STO

20

STO

20

STO

54

Multi-frequency
modulator

51

Power combiner

54

Multi-frequency
modulator

52

Rectifier

53

Voltage regulator

FIG. 2

FIG. 3

| | |
|---|---|
| Acquiring a WiFi signal; acquiring an extremely narrow millimeter wave | S201 |
| Converting, by one or more spin torque oscillators STOs, the WiFi signal into a microwave signal | S202 |
| Converting, by a rectifying device, the microwave signal and the extremely narrow millimeter wave into a DC output signal | S203 |
| Wirelessly charging, by the charging module, an electronic equipment with electromagnetic wave using the DC output signal | S204 |

FIG. 4

FIG. 5

Acquiring a WiFi signal; acquiring an extremely narrow millimeter wave — S201

Causing a spin-polarized current to flow through each STO with a drive of the WiFi signal, thereby causing a motion of a magnetization direction in each STO, and generating a microwave signal corresponding to the motion frequency of each STO — S302

Selecting a corresponding modulation frequency and a corresponding amplitude according to an oscillation frequency and an output power of each STO, and converting, by a multi-frequency modulator, microwave signals output by different STOs into microwave signals with a same frequency — S303

Perform phase matching and power superposition on the microwave signals output by the multi-frequency modulator by a power combiner to obtain an aggregated microwave signal — S304

Rectifying, by the rectifying device, the microwave signal and the extremely narrow millimeter wave into a DC electric signal — S305

Regulating, by a voltage regulator, the DC electric signal to output a stable DC output signal — S306

Wirelessly charging, by the charging module, an electronic equipment with electromagnetic wave using the DC output signal — S307

FIG. 6

100

Wireless charging equipment

30

WiFi signal device

20

STO

WiFi signal transmitting device

2.4GHz WiFi chip

WiFi signal receiving device

5GHz WiFi chip

5.8GHz WiFi chip

50

Rectifying device

52

Rectifier

53

Voltage regulator

40

Extremely narrow millimeter wave device

Extremely narrow millimeter wave transmitting device

Extremely narrow millimeter wave receiving device

10

Processor

80

Memory

60

Charging module

70

Positionging device

71

Beacon antenna

74

Infrared sensor

72

Laser radar sensor

75

802.11MC module

73

Proximity sensor

76

UWB device

FIG. 7

211

FIG. 8

Europäisches
Patentamt
European
Patent Office
Office européen
des brevets

## EUROPEAN SEARCH REPORT

**Application Number**

EP 24 15 1335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 635 657 A (UNIV XIAMEN) 9 April 2021 (2021-04-09) * the whole document * | 1-16 | INV. H02J50/20 H02J50/27 |
| A | US 2019/348869 A1 (SOH WEE TEE [SG] ET AL) 14 November 2019 (2019-11-14) * paragraph [0025] - paragraph [0040]; figures 1-9C * | 1-16 | |
| A | US 2016/013685 A1 (ZEINE HATEM [US]) 14 January 2016 (2016-01-14) * paragraph [0031] - paragraph [0089]; figures 1-12 * | 1-16 | |
| A | US 2011/181303 A1 (XIAO JOHN Q [US] ET AL) 28 July 2011 (2011-07-28) * paragraph [0025] - paragraph [0101] * | 1-16 | |

| | |
|---|---|
| | **TECHNICAL FIELDS SEARCHED (IPC)** |
| | H02J |

The present search report has been drawn up for all claims

| Place of search | Date of completion of the search | Examiner |
|---|---|---|
| Munich | 13 June 2024 | Dudoignon, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 15 1335

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | | Publication date |
|---|---|---|---|---|---|
| CN 112635657 | A | 09-04-2021 | NONE | | |
| US 2019348869 | A1 | 14-11-2019 | NONE | | |
| US 2016013685 | A1 | 14-01-2016 | BR | 112013004393 A2 | 25-08-2020 |
| | | | CN | 103155353 A | 12-06-2013 |
| | | | CN | 106877524 A | 20-06-2017 |
| | | | CN | 106953424 A | 14-07-2017 |
| | | | CN | 107069905 A | 18-08-2017 |
| | | | EP | 2609670 A1 | 03-07-2013 |
| | | | EP | 3474415 A1 | 24-04-2019 |
| | | | JP | 5738416 B2 | 24-06-2015 |
| | | | JP | 6125471 B2 | 10-05-2017 |
| | | | JP | 6797061 B2 | 09-12-2020 |
| | | | JP | 7405624 B2 | 26-12-2023 |
| | | | JP | 7428732 B2 | 06-02-2024 |
| | | | JP | 2013538548 A | 10-10-2013 |
| | | | JP | 2014223018 A | 27-11-2014 |
| | | | JP | 2017139954 A | 10-08-2017 |
| | | | JP | 2020058233 A | 09-04-2020 |
| | | | JP | 2022048193 A | 25-03-2022 |
| | | | JP | 2023184683 A | 28-12-2023 |
| | | | KR | 20140012937 A | 04-02-2014 |
| | | | KR | 20170089940 A | 04-08-2017 |
| | | | KR | 20180116474 A | 24-10-2018 |
| | | | KR | 20190087664 A | 24-07-2019 |
| | | | KR | 20200006631 A | 20-01-2020 |
| | | | KR | 20210029846 A | 16-03-2021 |
| | | | RU | 2013112936 A | 27-09-2014 |
| | | | RU | 2016131457 A | 07-12-2018 |
| | | | TW | 201212462 A | 16-03-2012 |
| | | | TW | 201528644 A | 16-07-2015 |
| | | | TW | 201601411 A | 01-01-2016 |
| | | | TW | 201717523 A | 16-05-2017 |
| | | | US | 2010315045 A1 | 16-12-2010 |
| | | | US | 2012193999 A1 | 02-08-2012 |
| | | | US | 2013207604 A1 | 15-08-2013 |
| | | | US | 2014035524 A1 | 06-02-2014 |
| | | | US | 2015022022 A1 | 22-01-2015 |
| | | | US | 2016013685 A1 | 14-01-2016 |
| | | | US | 2017358959 A1 | 14-12-2017 |
| | | | US | 2019386521 A1 | 19-12-2019 |
| | | | US | 2020185972 A1 | 11-06-2020 |
| | | | WO | 2012027166 A1 | 01-03-2012 |
| US 2011181303 | A1 | 28-07-2011 | NONE | | |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 15 1335

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | Publication date |
|---|---|---|---|

EPO FORM P0459

For more details about this annex : see Official Journal of the European Patent Office, No. 12/82